# EUROPÄISCHE PATENTSCHRIFT

(11) **EP 2 969 637 B1**
(45) Veröffentlichungstag und Bekanntmachung des Hinweises auf die Patenterteilung: **06.07.2016**
(21) Anmeldenummer: 15712860.4
(22) Anmeldetag: 23.03.2015
(51) Int. Cl.: B61L 3/22, B60L 5/40, B66C 7/00, B61L 3/00

(54) **SCHLEIFLEITUNG, STROMABNEHMER UND SCHLEIFLEITUNGSSYSTEM MIT SCHLITZHOHLLEITER ZUR AUFNAHME EINER ANTENNE**
CONDUCTOR LINE, CURRENT COLLECTOR, AND CONDUCTOR LINE SYSTEM WITH A SLOTTED WAVEGUIDE FOR RECEIVING AN ANTENNA
LIGNE DE CONTACT, BALAI CONDUCTEUR ET SYSTÈME DE LIGNE DE CONTACT ÉQUIPÉ D'UN GUIDE D'ONDES À FENTE DESTINÉ À RECEVOIR UNE ANTENNE

(30) Priorität: 27.05.2014 DE 102014107468
(43) Veröffentlichungstag der Anmeldung: 20.01.2016
(73) Patentinhaber: Conductix-Wampfler GmbH, 79576 Weil am Rhein (DE)
(72) Erfinder: MAIER, Bernd, 79418 Schlingen (DE)
(74) Vertreter: Charrier Rapp & Liebau
(86) Internationale Anmeldenummer: PCT/EP2015/056124
(87) Internationale Veröffentlichungsnummer: WO 2015/180856

(56) Entgegenhaltungen:
- DE-A1-102004 008 571
- DE-A1-102011 119 351
- DE-A1-102012 002 085

## Beschreibung

Die Erfindung betrifft eine Schleifleitung nach dem Oberbegriff des Anspruchs 1, einen Stromabnehmer nach dem Oberbegriff des Anspruchs 9 und ein Schleifleitungssystem nach dem Oberbegriff des Anspruchs 14.

Bei bekannten Schleifleitungssystemen fährt ein verfahrbarer elektrischer Verbraucher, entlang einer Schleifleitung. Zur Versorgung des Verbrauchers mit elektrischer Energie ist dieser mit einem Stromabnehmer ausgestattet, dessen Schleifkontakte in längs der Schleifleitung geführte Leiterstränge eingreifen. Der Verbraucher kann z.B. ein Transportgehänge einer Schienenhängebahn, ein auf Schienen verfahrbarer Leitungswagen oder auch sog. E-RTG-Containerkräne sein, welche mit einem elektrischen Fahrantrieb ausgerüstet sind, der von der Schleifleitung mit elektrischer Energie versorgt wird.

Um auf den Verbraucher Daten übertragen zu können, z. B. Steuerdaten, werden bei bekannten Schleifleitungssystemen sogenannte Schlitzhohlleiter bzw. Leckwellenleiter parallel zu den Leitersträngen der Schleifleitung geführt, in die am Verbraucher angeordnete Antennen eingreifen.

So offenbart die DE 10 2004 008 571 B4 ein Tragschienenprofil einer als Doppel-T-Träger ausgebildeten Tragschiene mit integriertem Schlitzhohlleiter zur Datenübertragung bei einer Schleifschienenanordnung. Der Schlitzhohlleiter ist dort im unteren Fußteil der Tragschiene mit nach unten weisendem Längsschlitz vorgesehen, in den eine Antenne des längs der Tragschiene verfahrbaren Fahrzeugs reicht. Seitlich, also um 90° gegenüber dem Längsschlitz verdreht, sind an der Tragschiene Stromschienenhalter und mit darin gehaltenen Stromschienen angeordnet.

Die DE 10 2011 119 351 A1 offenbart ein Transportsystem mit einem schienengeführten Fahrzeug und Schienenprofilteile einer Schienenanlage, wobei an einem Schienenprofilteil ein Schlitzhohlleiter und am Fahrzeug zwei Antennen angeordnet sind, welche in Schienenrichtung voneinander beabstandet sind und in den Schlitzhohlleiter hineinragen, wobei das Schienenprofilteil gerade ausgeführt ist. Auch dort ist der Schlitzhohlleiter an einem Doppel-T-Träger im Abstand zu den stromführenden Leitersträngen angeordnet

Die DE 10 2011 108 584 B1 offenbart eine Datenübertragungsanordnung mit einem Schlitzhohlleiterprofil, welches ortsfest an einem stationären Anlagenteil in Längsrichtung angebracht ist. In den Längsschlitz des Schlitzhohlleiterprofils reicht eine Antenne eines verfahrbaren Mobilteils, das mit diesem längs in dem Schlitzhohlleiterprofil verfahrbar ist.

Die DE 10 2012 002 085 A1 offenbart einen Schlitzhohlleiter für ein längs einer Schiene verfahrbares Schienenfahrzeug mit einem seitlich verlaufenden Längsschlitz. Um das Eindringen von Staub und Wasser in den Längsschlitz des Schlitzhohlleiters zu vermeiden, ist dort ein abgewickeltes Umlenkteil an dem sonst 90° gekippten T-förmigen Hohlraum angeordnet, so dass der Längsschlitz nach dem Umlenkteil senkrecht nach unten gerichtet ist. Die Antenne des Schienenfahrzeugs greift dabei senkrecht von unten in den Längsschlitz ein. Somit werden die elektromagnetischen Wellen durch das Umlenkteil aus dem T-förmigen Hohlraumprofil nach unten zum Längsschlitz abgelenkt.

Die Technik der Schlitzhohlleiter für die Datenübertragung auf spurgebundene Fahrzeuge ist seit langem bekannt und geht beispielsweise aus der DE 25 55 909 C3, DE 29 18 178 A1, DE 33 23 984 A1, DE 30 12 790 C1 oder auch DE 35 05 469 C2 der Firma Messerschmitt-Bölkow-Blohm GmbH hervor und braucht deshalb nicht im Einzelnen erläutert zu werden.

Ein Problem bei parallel zu stromübertragenden Schleifleitungen geführten Schlitzhohlleitern ist die Störung der Datenübertragung im Schlitzhohlleiter durch die Energieübertragung an den stromführenden Schleifleitungskontakten. Da die Schleifleitungskontakte nicht immer exakt in den stromführenden Leitersträngen geführt werden können, treten hier zum Teil kurze Kontaktverluste zwischen Schleifleitungskontakten und Leitersträngen auf, so dass der elektrische Stromfluss aufgrund der kleinen Abstände zwischen den Schleifleitungskontakten und den Leitersträngen nicht abbricht, sondern über die Luft fortgesetzt wird. Dies kann zu Störungen in der Datenübertragung führen. Die Schlitzhohlleiter sind deshalb in der Regel im Abstand zu den strom- und spannungsführenden Leitersträngen und Schleifkontakten geführt.

Dies erfordert jedoch mehr Platz für die Anbringung des Schlitzhohlleiters, wie u.a. aus der DE 10 2004 008 571 B4 und der DE 10 2011 119 351 A1 hervorgeht.

Weiter besteht der Nachteil, dass insbesondere bei Schleifleitungen mit senkrecht nach unten gerichteten Leitersträngen und somit senkrecht von unten nach oben einzuführenden Schleifleitungskontakten auch die verfahrbare Antenne des Schlitzhohlleiters von unten in den üblicherweise nach unten geöffneten T-förmigen Schlitzhohlleiter eingreift. Um eine gute Datenübertragung zu erhalten, soll dabei die schlitzförmige Öffnung des Schlitzhohlleiters möglichst schmal sein. Dies führt jedoch dazu, dass in seitlicher Richtung quer zur Verfahrrichtung nur relativ geringe Abweichung der Antenne von dem gewünschten Mittelweg erlaubt sind, da sonst die Antenne den Schlitzhohlleiter berührt, was auf jeden Fall vermieden werden muss. Um dies zu vermeiden, wird bei manchen Anwendungen der T-förmige Schlitzhohlleiters um 90° gekippt und somit mit waagrechtem Öffnungsschlitz angeordnet, wie in der DE 10 2004 008 571 B4 und der DE 10 2011 119 351 A1 gezeigt. Dies bringt jedoch mit sich, dass Feuchtigkeit und Schmutz sich leichter an dem unteren Öffnungsschlitz des Schlitzhohlleiters sammeln. Zudem ist es bei manchen Anordnungen aus baulichen Gründen nicht möglich, den Schlitzhohlleiter von der Seite zugänglich auszuführen.

Die DE 10 2009 052 871 A1 offenbart eine Vorrichtung zur berührungslosen Energie- und/oder Datenübertragung, wobei ein Fahrzeug auf einem Schienensystem bewegbar ist, das aus als Stranggussteilen bestehenden Schienenprofilteilen gefertigt ist. Entlang der Schienenprofilteile ist in Schienenrichtung ein Hohlleiter verlegt, der einen in Schienenrichtung verlaufenden Schlitz aufweist und aus Schlitzhohlleiterprofilteilen zusammengesetzt ist. Dabei sind die jeweils benachbarten Schlitzhohlleiterprofilteile mittels eines Profilverbinderteils, das jeweils teilweise in jedes der beiden benachbarten Schlitzhohlleiterprofilteile eingesteckt ist, verbunden. Dabei liegt das Profilverbinderteil so an der Innenwand der Schlitzhohlleiterprofilteile an und ist so dünnwandig ausgeführt, dass der von den Schlitzhohlleiterprofilteilen umgebene Hohlraum zur Durchleitung von elektromagnetischen Wellen in Schienenrichtung nur geringfügig reduziert ist.

Die DE 10 2010 048 586 A1 offenbart eine Anlage mit schienengeführtem Fahrzeug, wobei am Schienenteil zumindest ein Hohlleiterbereich zur Datenübertragung mittels Anregung mindestens einer Mode des Hohlleiterbereichs einstückig ausgebildet ist.

Die DE 39 02 076 C1 offenbart eine Anordnung zur ferngesteuerten, spurgeführten Bildübertragung mit einer Videokamera, die an einem verfahrbaren Wagen befestigt ist, der wenigstens ein Tragrad aufweist, das sich auf einer Tragschiene abstützt. Der Wagen ist mit einem Antrieb für das Tragrad, einer Steuervorrichtung für den Antrieb, einem Manipulator für die Videokamera, einem Sende- und Empfangsgerät für die ferngesteuerten Signale, einer Antenne und mindestens einer Führungsrolle versehen. Die stationäre Tragkonstruktion weist mindestens eine Führungsschiene auf, auf der sich Führungsrollen abstützen sowie einen Schlitzhohlleiter, in den die Antenne des Wagens eingreift.

Aufgabe der Erfindung ist es deshalb, eine Schleifleitung, einen Stromabnehmer sowie ein Schleifleitungssystem bereitzustellen, welche die oben genannten Nachteile überwinden und eine kompakte und materialsparende Bauweise sowie eine gute, fehlertolerante Übertragung ermöglichen.

Die Erfindung löst die Aufgabe durch eine Schleifleitung mit den Merkmalen des Anspruchs 1, einen Stromabnehmer mit den Merkmalen des Anspruchs 9 sowie ein Schleifleitungssystem mit den Merkmalen des Anspruchs 14. Vorteilhafte Weiterbildungen und Ausgestaltungen der Erfindung sind in den Unteransprüchen angegeben.

Die eingangs genannte Schleifleitung ist erfindungsgemäß dadurch gekennzeichnet, der Längsschlitz gegenüber einer Verfahrebene, in welcher der Stromabnehmer in Längsrichtung verfahrbar ist, um einen Winkel ungleich 90° um die Längsrichtung gekippt ist. Entsprechendes gilt für den eingangs genannten Stromabnehmer, der erfindungsgemäß dadurch gekennzeichnet ist, dass die Antenne ganz oder teilweise gegenüber einer Verfahrebene, in welcher der Stromabnehmer in Längsrichtung verfahrbar ist, um einen Winkel ungleich 90° um die Längsrichtung gekippt ist. Hierdurch können beim Verfahren der Antenne im Längsschlitz des Schlitzhohlleiters die durch die geringe Breite des Längsschlitz erlaubten Fahrabweichungen quer zur Längsrichtung und in der Verfahrebene vergrößert werden. Durch eine mit einer solchen Schleifleitung und einem solchen Stromabnehmer ausgerüsteten Schleifleitungssystem können diese Vorteile gut ausgenutzt werden.

In einer vorteilhaften Ausführung kann der Winkel zwischen Längsschlitz und Verfahrebene bzw. zwischen Antenne und Verfahrebene größer oder gleich 0°, bevorzugt größer 0° und kleiner 90° sein. Bevorzugt kann auch der Schlitzhohlleiter gegenüber der Verfahrebene um einen weiteren Winkel ungleich 90° um die Längsrichtung gekippt sein, der größer oder gleich 0°, bevorzugt größer 0° und kleiner 90° ist. Vorteilhaft können dabei der Winkel und der weitere Winkel gleich groß sein, um eine gute Datenübertragung sicherzustellen.

In einer vorteilhaften Ausgestaltung können der Längsschlitz und eine Kontaktöffnung des Leiterstrangs zur Aufnahme des Schleifkontakts um den Winkel zueinander gekippt sein.

Weiter kann in einer vorteilhaften Fortbildung ein in den Längsschlitz des Schlitzhohlleiters ragendes Ende der Antenne um den Winkel α abgewinkelt sein. Weiter können der Längsschlitz und eine Kontaktöffnung des Leiterstrangs zur Aufnahme des Schleifkontakts um den Winkel α zueinander gekippt sein. Hierdurch kann die Schleifleitung kompakter gebaut werden, und zudem können in der Verfahrebene quer zur Längsrichtung erfolgende Fahrabweichungen besser ausgeglichen werden.

In einer weiteren günstigen Ausführung kann das Leiterprofil quer zur Längsrichtung neben und/oder unterhalb des Längsschlitzes mindestens eine Schleiffläche für eine entsprechend geformte und ausgerichtete Schleifkontaktfläche des Schleifkontakts aufweisen.

Bevorzugt können der Schlitzhohlleiter und das Leiterprofil als Baueinheit ausgebildet sein. In einer materialsparenden und fertigungstechnisch günstigen Ausführung können der Schlitzhohlleiter und das Leiterprofil einstückig aus einem elektrisch leitenden Material ausgebildet sein.

Vorteilhaft kann der Leiterstrang ein Erdungsleiterstrang für einen Erdungsschleifkontakt sein, und/oder zusätzlich zu dem Leiterstrang mindestens ein weiterer Leiterstrang, insbesondere Phasenleiterstrang vorgesehen sein.

Bevorzugt können der Schleifkontakt und die Antenne in Längsrichtung nebeneinander angeordnet sind. Auch können vorteilhaft in Längsrichtung zwei Antennen hintereinander angeordnet sein.

Vorteilhaft können Schleifkontakt und Antenne zum gemeinsamen Bewegen von und zu dem Leiterprofil bzw. einem Längsschlitz des Schlitzhohlleiters an einem gemeinsamen Zustellmechanismus angeordnet sein.

Bevorzugt kann bei dem erfindungsgemäßen Schleifleitungssystem der verfahrbare elektrische Verbraucher mehrere Schleifkontakte zur Kontaktierung mit entsprechenden Leiterprofilen der Schleifleitung aufweisen, wobei das mindestens eine Leiterprofil einen Erdungsleiter und/oder Schutzleiter bildet.

Auch kann das Schleifleitungssystem eine Codeschiene umfassen und statt oder zusätzlich zu der Antenne eine Codeleseeinrichtung am Stromabnehmer vorgesehen sein.

Die Erfindung wird nachfolgend anhand von detaillierten Ausführungsbeispielen mit Bezug auf die begleitenden Zeichnungen beschrieben. Diese zeigen:
- **Fig. 1**: eine seitliche Draufsicht auf einen Abschnitt eines erfindungsgemäßen Schleifleitungssystems;
- **Fig. 2**: eine stirnseitige, schnittähnliche Draufsicht auf das Schleifleitungssystems aus Fig. 1;
- **Fig. 3**: eine Detailansicht eines Teils des Schleifleitungssystems aus Fig. 2.

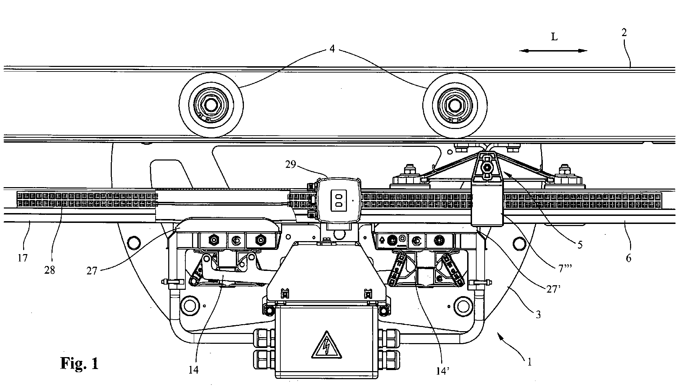

Fig. 1 zeigt eine seitliche Draufsicht auf einen Abschnitt eines erfindungsgemäßen Schleifleitungssystems 1 mit einem im Wesentlichen Doppel-U-förmigen Schienenstrang 2. An dem Schienenstrang 2 ist ein Stromabnehmer 3 eines nicht gezeichneten elektrischen Verbrauchers mit Laufrollen 4 in eine Längsrichtung L verfahrbar. Der Stromabnehmer 3 dient zur Versorgung des längs des Schienenstrangs 2 verfahrbaren elektrischen Verbrauchers, beispielsweise eines Containerkrans.

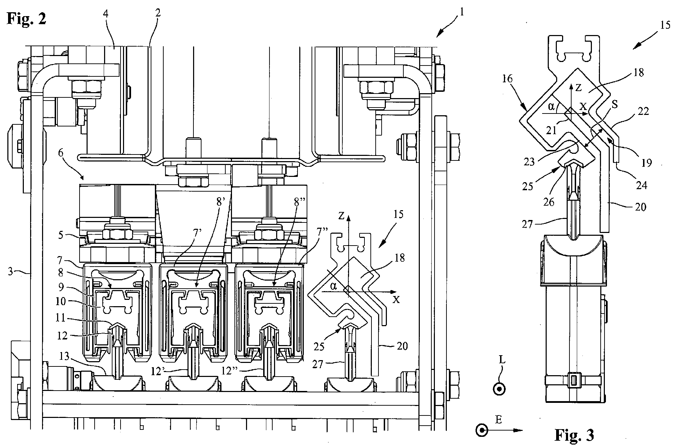

An der unteren Seite des Schienenstrangs 2 ist mittels in Längsrichtung L des Schienenstrangs 2 voneinander beabstandet angebrachten Schleifleitungshalterungen 5 eine erfindungsgemäße Schleifleitung 6 nach unten hängend angebracht. Die Schleifleitung 6 weist dabei in Fig. 2 gut erkennbar drei nebeneinander angeordnete Leiterstranghalterungen 7, 7' und 7" zur Halterung von länglichen Phasenleitersträngen 8, 8' und 8" auf. Da die Phasenleiterstränge 8' und 8" identisch zum Phasenleiterstrang 8 ausgebildet sind, gelten die zum Phasenleiterstrang 8 gemachten Ausführungen entsprechend.

Der Phasenleiterstrang 8 weist ein längliches Isolierprofil 9 auf, welches von der Leiterstranghalterung 7 gehalten wird. In das Isolierprofil 9 ist dann wiederum ein längliches, elektrisch leitendes Phasenleiterprofil 10 mit ebenfalls elektrisch leitender länglicher Schleiffläche 11, bevorzugt aus Aluminium oder Stahl, eingesetzt.

An der Schleiffläche 11 schleift ein Schleifkontakt 12, welcher an einem Schleifkontaktträger 13 des Stromabnehmers 3 angeordnet ist. Der Schleifkontaktträger 13 mit Schleifkontakt 12 kann in an sich bekannter Weise über einen in Fig. 1 exemplarisch gezeigten, an sich bekannte Zustellmechanismus 14 an die Schleiffläche 11 heran und von dieser weg bewegt werden. Im Betrieb wird der Schleifkontakt 12 ständig an die Schleiffläche 11 angedrückt, beispielsweise über Federkraft. In Fig. 2 gezeigte weitere Schleifkontakte 12' bzw. 12" mit zugehörigen Schleifkontaktträgern sind weitgehend identisch zum Schleifkontakt 12 und Schleifkontaktträger 13 ausgebildet, so dass die hierzu gemachten Ausführungen entsprechend gelten. Insbesondere weist jeder Schleifkontakt 12, 12' bzw. 12" einen eigenen Zustellmechanismus 14 auf.

Der Phasenleiterstrang 8 dient der Energieversorgung des verfahrbaren Verbrauchers und steht im Normalbetrieb unter Spannung, so dass Strom über die Schleiffläche 11 zu dem Schleifkontakt 12 fließt. Die oben beschriebene Ausbildung ist dem Fachmann grundsätzlich bekannt und Bedarf keiner weiteren Ausführungen.

Zusätzlich ist bei einem solchen Schleifleitungssystem 1 üblicherweise ein Erdungsleiterstrang 15 zur Verbindung des verfahrbaren elektrischen Verbrauchers mit dem Erdpotential des Schleifleitungssystems 1 vorgesehen, welcher nachfolgend vor allem anhand der Detailzeichnung in Fig. 3 beschrieben wird.

Der Erdungsleiterstrang 15 weist hierzu ein elektrisch leitendes Erdungsleiterprofil 16 auf, das wie das Phasenleiterprofil 10 von einem Erdungsisolierprofil 17 umgeben und mit einer Leiterstranghalterung 7"' wie die Phasenleiterstränge 8, 8', 8" an der Schleifleitung 6 befestigt ist, wie in Fig. 1 erkennbar. Aus Gründen der besseren Übersichtlichkeit sind in Fig. 2 und 3 das Erdungsisolierprofil 17 und die Leiterstranghalterung 7"' nicht dargestellt.

Das Erdungsleiterprofil 16 bildet in der vorliegenden Ausführung zugleich einen an sich bekannten, im wesentlichen T-förmigen Schlitzhohlleiter 18 aus, der erfindungsgemäß um einen Winkel α ungleich 90° gegenüber einer Verfahrebene E, in welcher der Stromabnehmer 3 verfährt, um die Längsrichtung L gedreht bzw. gekippt ist. Insbesondere ist auch ein Längsschlitz 19 des Schlitzhohlleiters 18 um den Winkel α gekippt und ragt somit schräg im Winkel α nach in Fig. 3 rechts unten und außen.

Bevorzugt wird dann eine entsprechend abgewinkelte Antenne 20 verwendet, deren für die Datenübertragung wichtiges vorderes Antennenende 21 entsprechend dem Kippwinkel α des Schlitzhohlleiters 18 abgewinkelt ist. Hierdurch greift das Antennenende 21 dann in gewünschter Weise durch den gekippten Längsschlitz 19 in den Hohlraum des Schlitzhohlleiters 18 ein, so dass sich keine Nachteile für die Datenübertragung ergeben. Denn durch die abgewinkelte Antenne 20 verläuft das Antennenende 21 wieder in der Symmetrielinie des T-förmigen Schlitzhohleiters 18.

Eine in Fig. 3 obere Schlitzwandung 22 des Längsschlitzes 19 bildet eine Abdeckung für den Längsschlitz 19 und eine gegenüberliegende untere Schlitzwandung 23 gegen Verschmutzung durch Regen, Staub und andere äußere Einflüsse.

In der in Fig. 3 dargestellten Ausführung kann die obere Schlitzwandung 22 durch eine nach unten abgewinkelte Wandung 24 nach unten verlängert sein, um zusätzlich Schutz für den Schlitzhohlleiter 47 und die Antenne 20 bereitzustellen. Die abgewinkelte Wandung 24 ist aber nicht unbedingt nötig, um den erfindungsgemäßen Erfolg des gekippten Schlitzhohlleiters 18 zu erzielen. Anstelle der abgewinkelten Wandung 24 kann die obere Schlitzwandung 23 auch gerade verlängert sein, so dass sie über die untere Schlitzwandung 23 hinaussteht. Auch kann die abgewinkelte obere Schlitzwandung 24 vollständig weggelassen werden, so dass beide Schlitzwandungen 22, 23 gleich lang sind.

An der unteren Schlitzwandung 23 ist ein verbreiterter, etwas gegenüber dem Schlitzhohlleiter 18 leicht federnder Abschnitt 25 des Erdungsisolierprofils 17 vorgesehen. An dem Abschnitt 25 ist wiederum eine Schleiffläche 26 für einen Erdungsschleifkontakt 27 vorgesehen. Der Erdungsschleifkontakt 27 kann wie die Schleifkontakte 12, 12' bzw. 12" über einen eigenen Zustellmechanismus 14 zu und von der Schleiffläche 26 bewegt werden.

Der gekippte Schlitzhohlleiter 18 mit entsprechend gekippter Antenne 20 weist den Vorteil auf, dass die ansonsten kleinen Toleranzen für die Bewegung der Antenne 20 in einer quer zur Längsrichtung L verlaufenden X-Richtung vergrößert werden. Dabei verläuft die X-Richtung auch parallel zu der Verfahrebene E, in welcher der Stromabnehmer 3 verfahren wird. Üblicherweise erfolgt die Zustellung der Schleifkontakte 12, 12', 12" und des Erdungsschleifkontakts 27 dabei in der senkrecht zur Verfahrebene E stehenden Höhenrichtung Z. In den Zeichnungen verläuft die Verfahrebene E somit horizontal, wird also durch die Längsrichtung L und die X-Richtung aufgespannt. Bei den in der DE 10 2004 008 571 B4 und der DE 10 2011 119 351 A1 gezeigten Schleifleitungen mit zur Seite weisenden Leitungssträngen verläuft die Verfahrebene hingegen vertikal, da die dortigen Schleifkontakte von der Seite an die Leiterstränge herangefahren werden.

Da der Längsschlitz 19 mit seiner schmalen Breite S um den Winkel α gekippt ist, vergrößert sich der Spielraum für Bewegungen der Antenne 20 in Verfahrebene, insbesondere in der X-Richtung erfindungsgemäß. Hierdurch kann eine Berührung der Wandungen 22, 23 des Längsschlitz 19 durch die Antenne 20 noch besser vermieden werden.

Da im Normalbetrieb über den Erdungsschleifkontakt 27 keine elektrische Leistung übertragen wird, besteht keine Gefahr, dass es zwischen Erdungsleiterprofil 16 und Erdungsschleifkontakt 27 zu Funkenüberschlägen kommt, welche die Datenübertragung mittels des Schlitzhohlleiters 18 und der Antenne 20 nachteilig beeinflussen. Sofern doch größere Ströme fließen, handelt es sich um einen Notfall, bei dem das Schleifleitungssystem 1 ohnehin schnell stillgesetzt werden soll.

Erdungsleiterprofil 16 und Schlitzhohlleiter 18 sind vorliegend einstückig aus dem gleichen Material gefertigt und bilden somit eine Baueinheit, wodurch die Fertigung und der Einbau vereinfacht werden können. Erdungsleiterprofil 16 und Schlitzhohlleiter 18 können aber auch aus separaten Teilen und/oder unterschiedlichen Materialien gefertigt werden. Auch kann der Schlitzhohlleiter 18 einen anderen geeigneten Querschnitt aufweisen.

Durch die Integration des Schlitzhohlleiters 18 in den Erdungsleiterstrang 15 bzw. das Erdungsleiterprofil 16 kann bei der gezeichneten Ausführung die Schleifleitung 6 sehr kompakt ausgeführt werden, so dass keine voneinander getrennten, platzraubenden Aufhängungen für einen Erdungsleiterstrang und einen Schlitzhohlleiter vorgesehen werden müssen. Die Schleifleitung 6 kann somit kleiner bauen und es wird weniger Material benötigt, und auch die Montage vereinfacht sich.

Um die Zuverlässigkeit des Schleifleitungssystems 1 weitere zu erhöhen, kann wie bei der in Fig. 1 gezeigten Ausführung vorgesehen werden, an einem weiteren Zustellmechanismus 14' eine weitere Antenne mit Erdungsschleifkontakten 27' anzuordnen. Hierdurch kann eine Unterbrechung, z.B. durch eine thermisch getrennte Verbindungsstelle des nicht aus Endlosmaterial gebildeten Erdungsleiterprofils 16 und Schlitzhohlleiters 18 überbrückt werden, ohne die Datenübertragung zu unterbrechen.

Weiter ist seitlich an dem Erdungsisolierprofil 17 ein in Fig. 1 gezeigtes, an sich bekanntes längliches Codeband 28 angeordnet, welches über eine an dem Stromabnehmer 3 angebrachte an sich bekannte Leseeinheit 29 ausgelesen und somit die Position bestimmt werden kann.

Anstatt der kombinierten Baueinheit aus Erdungsleiterprofil 16 und Schlitzhohlleiter 18 können diese auch als voneinander getrennte Teile ausgeführt sein. Beispielsweise kann der Erdungsleiterstrang 15 wie die Phasenleiterstränge 8, 8', 8" ausgebildet sein, und der Schlitzhohlleiter 18 an einer eigenen Halterung an der Schleifleitung 6 befestigt sein.

### Bezugszeichenliste

- 1: Schleifleitungssystem
- 2: Schienenstrang
- 3: Stromabnehmer
- 4: Laufrollen
- 5: Schleifleitungshalterungen
- 6: Schleifleitung
- 7, 7', 7": Leiterstranghalterungen
- 8, 8', 8": Phasenleiterstränge
- 9: Isolierprofil
- 10: Phasenleiterprofil
- 11: Schleiffläche Phasenleiterstrang
- 12, 12', 12": Schleifkontakt
- 13: Schleifkontaktträger
- 14: Zustellmechanismus
- 15: Erdungsleiterstrang
- 16: Erdungsleiterprofil
- 17: Erdungsisolierprofil
- 18: gekippter Schlitzhohlleiter
- 19: gekippter Längsschlitz
- 20: Antenne
- 21: abgewinkeltes Antennenende
- 22: obere Schlitzwandung
- 23: untere Schlitzwandung
- 24: abgewinkelte obere Schlitzwandung
- 25: federnder Abschnitt
- 26: Schleiffläche Erdungsleiterprofil
- 27: Erdungsschleifkontakt
- 28: Codeband
- 29: Leseeinheit

- E: Verfahrebene Stromabnehmer
- L: Längsrichtung Schleifleitung
- S: Breite des Längsschlitz
- X: Richtung quer zur Längsrichtung in Verfahrebene
- Z: Höhenrichtung senkrecht zur Verfahrebene

## Patentansprüche

1. Schleifleitung (6) zur Versorgung mindestens eines an der Schleifleitung (6) in deren Längsrichtung (L) verfahrbaren elektrischen Verbrauchers, mit mindestens einem in Längsrichtung (L) verlaufenden Leiterstrang (15) mit einem elektrisch leitenden Leiterprofil (16) zur Kontaktierung mit einem Schleifkontakt (27) eines Stromabnehmers (3) des Verbrauchers und mit mindestens einem in Längsrichtung (L) verlaufenden länglichen Schlitzhohlleiter (18) mit einem Längsschlitz (19) zur Aufnahme einer mit dem Verbraucher verfahrbaren Antenne (20), **dadurch gekennzeichnet, dass** der Längsschlitz (19) gegenüber einer Verfahrebene (E), in welcher der Stromabnehmer (3) in Längsrichtung (L) verfahrbar ist, um einen Winkel (α) ungleich 90° um die Längsrichtung (L) gekippt ist.

2. Schleifleitung (6) nach Anspruch 1, **dadurch gekennzeichnet, dass** der Winkel (α) größer oder gleich 0°, bevorzugt größer 0° und kleiner 90° ist.

3. Schleifleitung (6) nach Anspruch 1 oder 2, **dadurch gekennzeichnet, dass** auch der Schlitzhohlleiter (18) gegenüber der Verfahrebene (E) um einen weiteren Winkel (α) ungleich 90° um die Längsrichtung (L) gekippt ist, der größer oder gleich 0°, bevorzugt größer 0° und kleiner 90° ist.

4. Schleifleitung (6) nach Anspruch 3, **dadurch gekennzeichnet, dass** der Winkel (α) und der weitere Winkel gleich groß sind.

5. Schleifleitung (6) nach einem der voranstehenden Ansprüche, **dadurch gekennzeichnet, dass** der Längsschlitz (19) und eine Kontaktöffnung des Leiterstrangs (15) zur Aufnahme des Schleifkontakts (27) um den Winkel (α) zueinander gekippt sind.

6. Schleifleitung (6) nach einem der voranstehenden Ansprüche, **dadurch gekennzeichnet, dass** das Leiterprofil (16) quer zur Längsrichtung (L) neben und/oder unterhalb des Längsschlitzes (19) mindestens eine Schleiffläche (26) für eine entsprechend geformte und ausgerichtete Schleifkontaktfläche (24) des Schleifkontakts (27) aufweist.

7. Schleifleitung (6) nach einem der voranstehenden Ansprüche, **dadurch gekennzeichnet, dass** der Leiterstrang ein Erdungsleiterstrang (15) für einen Erdungsschleifkontakt (27) ist, und/oder dass zusätzlich zu dem Leiterstrang (15) mindestens ein weiterer Leiterstrang, insbesondere Phasenleiterstrang (8, 8', 8") vorgesehen ist.

8. Schleifleitung (6) nach einem der voranstehenden Ansprüche, **dadurch gekennzeichnet, dass** der Schlitzhohlleiter (18) und das Leiterprofil (16) als Baueinheit ausgebildet sind.

9. Stromabnehmer (3) für einen in eine Längsrichtung (L) längs einer Schleifleitung (6) verfahrbaren elektrischen Verbraucher, mit mindestens einem Schleifkontakt (27) zur Kontaktierung mit einem elektrisch leitenden Leiterprofil (16) eines Leiterstrangs (15) der Schleifleitung (6) und mit mindestens einer Antenne (20) zur Datenübertragung zu einem in Längsrichtung (L) verlaufenden länglichen Schlitzhohlleiter (18) der Schleifleitung (6), wobei der Schlitzhohlleiter (18) einen Längsschlitz (19) für die Antenne (20) aufweist, **dadurch gekennzeichnet, dass** die Antenne (20) oder ein Teil (21) davon ganz oder teilweise gegenüber einer Verfahrebene (E), in welcher der Stromabnehmer (3) in Längsrichtung (L) verfahrbar ist, um einen Winkel (α) ungleich 90° um die Längsrichtung (L) gekippt ist.

10. Stromabnehmer (3) nach Anspruch 9, **dadurch gekennzeichnet, dass** der Winkel (α) größer oder gleich 0°, bevorzugt größer 0° und kleiner 90° ist.

11. Stromabnehmer nach Anspruch 10, **dadurch gekennzeichnet, dass** ein in den Längsschlitz (19) des Schlitzhohlleiters (17) ragendes Ende (21) der Antenne (20) um den Winkel (α) abgewinkelt ist.

12. Stromabnehmer nach einem der Ansprüche 9 bis 11, **dadurch gekennzeichnet, dass** in Längsrichtung (L) zwei Antennen (20) hintereinander angeordnet sind.

13. Stromabnehmer (3) nach einem der Ansprüche 9 bis 12, **dadurch gekennzeichnet, dass** der Schleifkontakt (27) und die Antenne (20) zum gemeinsamen Bewegen von und zu dem Leiterprofil (16) bzw. dem Längsschlitz (19) an einem gemeinsamen Zustellmechanismus (14) angeordnet sind.

14. Schleifleitungssystem mit mindestens einem an einer Schleifleitung (6) in deren Längsrichtung (L) verfahrbaren elektrischen Verbraucher, der einen Stromabnehmer (3) mit mindestens einem Schleifkontakt (27) zur Kontaktierung mit mindestens einem elektrischen leitenden Leiterprofil (16) der Schleifleitung (6) aufweist, und der mindestens eine Antenne (20) zur Datenübertragung mit einem in Längsrichtung (L) verlaufenden länglichen Schlitzhohlleiter (18) der Schleifleitung (6) aufweist, wobei der Schlitzhohlleiter (18) einen Längsschlitz (19) für die Antenne (20) hat, **dadurch gekennzeichnet, dass** die Schleifleitung (6) nach einem der Ansprüche 1 bis 8 und der Stromabnehmer (3) nach einem der Ansprüche 9 bis 13 ausgebildet sind.

15. Schleifleitungssystem nach Anspruch 14, **dadurch gekennzeichnet, dass** der verfahrbare elektrische Verbraucher mehrere Schleifkontakte (12, 12', 12", 27) zur Kontaktierung mit entsprechenden Leiterprofilen (10) der Schleifleitung (6) aufweist, wobei das mindestens eine Leiterprofil (16) einen Erdungsleiter und/oder Schutzleiter bildet.

## Claims

1. Contact line (6) for supplying at least one electrical consumer which is capable of travelling on the contact line (6) in the longitudinal direction (L) thereof, with at least one conductor (15) running in the longitudinal direction (L) with an electrically conducting conductor profile (16) for making contact with a sliding contact (27) of a current collector (3) of the consumer and with at least one elongated slit hollow waveguide (18) running in the longitudinal direction (L) and provided with a longitudinal slit (19) for receiving an antenna (20) movable with the consumer, **characterised in that** the longitudinal slit (19) is tilted about the longitudinal direction (L) by an angle (α) other than 90° in relation to a travelling plane (E) in which the current collector (3) is movable in the longitudinal direction (L).

2. Contact line (6) according to claim 1, **characterised in that** the angle (α) is greater than or equal to 0°, preferably greater than 0° and less than 90°.

3. Contact line (6) according to claim 1 or 2, **characterised in that** the slit hollow waveguide (18) is also tilted about the longitudinal direction (L) by a further angle (α) other than 90° in relation to the travelling plane (E) which is greater than or equal to 0°, preferably greater than 0° and less than 90°.

4. Contact line (6) according to claim 3, **characterised in that** the angle (α) and the further angle are the same size.

5. Contact line (6) according to one of the preceding claims, **characterised in that** the longitudinal slit (19) and a contact opening of the conductor (15) for receiving the sliding contact (27) are tilted by the angle (α) in relation to one another.

6. Contact line (6) according to one of the preceding claims, **characterised in that** the conductor profile (16) transversely to the longitudinal direction (L) next to and/or underneath the longitudinal slit (19) has at least one sliding surface (26) for a correspondingly shaped and aligned sliding contact surface (24) of the sliding contact (27).

7. Contact line (6) according to one of the preceding claims, **characterised in that** the conductor is a grounding conductor (15) for a grounding sliding contact (27), and/or **in that** in addition to the conductor (15) at least one further conductor, in particular a phase conductor (8, 8', 8") is provided.

8. Contact line (6) according to one of the preceding claims, **characterised in that** the slit hollow waveguide (18) and the conductor profile (16) are embodied in the form of a unit.

9. Current collector (3) for an electrical consumer which is capable of travelling in a longitudinal direction (L) along a contact line (6), with at least one sliding contact (27) for making contact with an electrically conducting conductor profile (16) of a conductor (15) of the contact line (6) and with at least one antenna (20) for transmission of data to an elongated slit hollow waveguide (18) of the contact line (6) movable in the longitudinal direction (L), wherein the slit hollow waveguide (18) has a longitudinal slit (19) for the antenna (20), **characterised in that** the antenna (20) or a part (21) thereof is tilted wholly or partly about the longitudinal direction (L) by an angle (α) other than 90° in relation to a travelling plane (E ) in which the current collector (3) is movable in the longitudinal direction (L).

10. Current collector (3) according to claim 9, **characterised in that** the angle (α) is greater than or equal to 0°, preferably greater than 0° and less than 90°.

11. Current collector (3) according to claim 10, **characterised in that** one end (21) of the antenna (20) projecting into the longitudinal slit (19) of the slit hollow waveguide (18) is bent at the angle (α).

12. Current collector according to one of claims 9 to 11, **characterised in that** two antennas (20) are arranged one behind the other in the longitudinal direction (L).

13. Current collector (3) according to one of claims 9 to 12, **characterised in that** the sliding contact (27) and the antenna (20) are arranged on a common feed mechanism (14) for joint movement from and to the conductor profile (16) and the longitudinal slit (19).

14. Contact line system with at least one electrical consumer which is movable on a contact line (6) in the longitudinal direction (L) thereof, and has a current collector (3) with at least one sliding contact (27) for making contact with at least one electrically conducting conductor profile (16) of the contact line (6), and has at least one antenna (20) for transmission of data with an elongated slit hollow waveguide (18) of the contact line (6) running in the longitudinal direction (L), wherein the slit hollow waveguide (18) has a longitudinal slit (19) for the antenna (20), **characterised in that** the contact line (6) is embodied according to one of claims 1 to 8 and the current collector (3) is embodied according to one of claims 9 to 13.

15. Contact line system according to claim 14, **characterised in that** the movable electrical consumer has a plurality of sliding contacts (12, 12', 12", 27) for making contact with corresponding conductor profiles (10) of the contact line (6), wherein the at least one conductor profile (16) forms a grounding conductor and/or a protective conductor.

## Revendications

1. Ligne de contact (6) servant à alimenter au moins un consommateur électrique pouvant être déplacé au niveau de la ligne de contact (6) dans la direction longitudinale (L) de cette dernière, comprenant au moins une branche conductrice (15) s'étendant dans la direction longitudinale (L), pourvue d'un profilé conducteur (16) électroconducteur servant à établir un contact avec un contact par frottement (27) d'un balai conducteur (3) du consommateur et comprenant au moins un guide d'ondes à fente (18) oblongue s'étendant dans la direction longitudinale (L), pourvu d'une fente longitudinale (19) servant à recevoir une antenne (20) pouvant être déplacée avec le consommateur, **caractérisée en ce que** la fente longitudinale (19) peut être basculée selon un angle (α) différent de 90° autour de la direction longitudinale (L) par rapport à un plan de déplacement (E), dans lequel le balai conducteur (3) peut être déplacé dans la direction longitudinale (L).

2. Ligne de contact (6) selon la revendication 1, **caractérisée en ce que** l'angle (α) est supérieur ou égal à 0°, de manière préférée est supérieur à 0° et inférieur à 90°.

3. Ligne de contact (6) selon la revendication 1 ou 2, **caractérisée en ce que** le guide d'ondes à fente (18) est également basculé par rapport au plan de déplacement (E) selon un autre angle (α) différent de 90° autour de la direction longitudinale (L), qui est supérieur ou égal à 0°, de manière préférée supérieure à 0° et inférieur à 90°.

4. Ligne de contact (6) selon la revendication 3, **caractérisée en ce que** l'angle (α) et l'autre angle présentent la même valeur.

5. Ligne de contact (6) selon l'une quelconque des revendications précédentes, **caractérisée en ce que** la fente longitudinale (19) et une ouverture de contact de la branche conductrice (15) sont basculées l'une par rapport à l'autre selon l'angle (α) afin de recevoir le contact par frottement (27).

6. Ligne de contact (6) selon l'une quelconque des revendications précédentes, **caractérisée en ce que** le profilé conducteur (16) présente, de manière transversale par rapport à la direction longitudinale (L), à côté et/ou sous la fente longitudinale (19), au moins une surface de frottement (26) pour une surface de contact par frottement (24), formée et orientée de manière correspondante, du contact par frottement (27).

7. Ligne de contact (6) selon l'une quelconque des revendications précédentes, **caractérisée en ce que** la branche conductrice est une branche conductrice de mise à la terre (15) pour un contact par frottement de mise à la terre (27), et/ou **en ce qu'**est prévue, en supplément de la branche conductrice (15), au moins une autre branche conductrice, en particulier une branche conductrice de phase (8, 8', 8").

8. Ligne de contact (6) selon l'une quelconque des revendications précédentes, **caractérisée en ce que** le guide d'ondes à fente (18) et le profilé conducteur (16) sont réalisés sous la forme d'une unité modulaire.

9. Balai conducteur (3) pour un consommateur électrique pouvant être déplacé dans une direction longitudinale (L) le long d'une ligne de contact (6), comprenant au moins un contact par frottement (27) servant à établir un contact avec un profilé conducteur (16) électroconducteur d'une branche conductrice (15) de la ligne de contact (6) et comprenant au moins une antenne (20) servant à transmettre des données en direction d'un guide d'ondes à fente (18) allongé, s'étendant dans la direction longitudinale (L), de la ligne de contact (6), dans lequel le guide d'ondes à fente (18) présente une fente longitudinale (19) pour l'antenne (20), **caractérisé en ce que** l'antenne (20) ou une partie (21) de celle-ci est basculée en totalité ou en parie selon un angle (α) différent de 90° autour de la direction longitudinale (L) par rapport à un plan de déplacement (E), dans lequel le balai conducteur (3) peut être déplacé dans une direction longitudinale (L).

10. Balai conducteur (3) selon la revendication 9, **caractérisé en ce que** l'angle (α) est supérieur ou égal à 0°, de manière préférée est supérieur à 0° et est inférieur à 90°.

11. Balai conducteur selon la revendication 10, **caractérisé en ce qu'**une extrémité (21), dépassant dans la fente longitudinale (19) du guide d'ondes à fente (17), de l'antenne (20) forme l'angle (α).

12. Balai conducteur selon l'une quelconque des revendications 9 à 11, **caractérisé en ce que** deux antennes (20) sont disposées l'une derrière l'autre dans la direction longitudinale (L).

13. Balai conducteur (3) selon l'une quelconque des revendications 9 à 12, **caractérisé en ce que** le contact par frottement (27) et l'antenne (20) sont disposés au niveau d'un mécanisme de rapprochement (14) commun aux fins du déplacement en commun depuis ou vers le profilé conducteur (16) ou la fente longitudinale (19).

14. Système de ligne conductrice comprenant au moins un consommateur électrique pouvant être déplacé au niveau d'une ligne conductrice (6) dans la direction longitudinale (L) de cette dernière, lequel présente un balai conducteur (3) pourvu au moins d'un contact par frottement (27) servant à établir un contact avec au moins un profilé conducteur (16) électroconducteur de la ligne de contact (6) et qui présente au moins une antenne (20) servant à transmettre des données avec un guide d'ondes à fente (18) oblongue, s'étant dans la direction longitudinale (L), de la ligne de contact (6), dans lequel le guide d'onde à fente (18) a une fente longitudinale (19) pour l'antenne (20), **caractérisé en ce que** la ligne de contact (6) est réalisée selon l'une quelconque des revendications 1 à 8 et le balai conducteur (3) est réalisé selon l'une quelconque des revendications 9 à 13.

15. Système de ligne de contact selon la revendication 14, **caractérisé en ce que** le consommateur électrique pouvant être déplacé présente plusieurs contacts par frottement (12, 12', 12", 27) servant à établir un contact avec des profilés conducteurs (10) correspondants de la ligne de contact (6), dans lequel l'au moins un profilé conducteur (16) forme un conducteur de mise à la terre et/ou un conducteur de protection.
